# EUROPEAN PATENT APPLICATION

(11) **EP 1 983 206 A1**
(43) Date of publication of application: **22.10.2008**
(21) Application number: 06823085.3
(22) Date of filing: 07.11.2006
(51) Int. Cl.: F16D 3/84, F16J 3/04, F16J 15/52

(54) **BOOT FOR CONSTANT VELOCITY UNIVERSAL JOINT**

(30) Priority: 10.02.2006 JP 2006034096
(71) Applicant: NTN Corporation, Osaka-shi, Osaka 550-0003 (JP)
(72) Inventor: SHIBATA, Takaaki, Iwata-shi Shizuoka 4380037 (JP)
(74) Representative: Mischung, Ralf
(86) International application number: PCT/JP2006/322172
(87) International publication number: WO 2007/091355

(57) **Abstract**

The present invention provides a boot for a constant velocity universal joint in which a portion of the boot does not interfere with an ear section of a boot band even when the joint is at a high operating angle. The present invention is the boot for a constant velocity universal joint housing a torque transmitting component between an outer joint component and an inner joint component and in which a shaft connected to the inner joint component extends outside of the joint. The boot is disposed between an outer circumference of the outer joint component and an outer circumference of an intermediate section of the shaft. The boot includes a cylindrical large diameter section 1a that is fixed onto an outer circumferential surface of an outer joint component 2 by a boot band 3, a cylindrical small diameter section that is fixed onto an outer circumferential surface of the shaft, a bellows section 1d that connects the large diameter section and the small diameter section, and a shoulder section 1c that is provided between the large diameter section and the bellows section and covers an opening end side outer circumferential surface of the outer joint component. The shoulder section 1c is extended by a predetermined length from the boot band 3 to an opening end side of the outer joint component.

## Description

### TECHNICAL FIELD

The present invention relates to a boot that covers a constant velocity universal joint used in a drive shaft of an automobile and the like. In particular, the present invention relates to a boot for a constant velocity universal joint that is configured so that a shoulder section and a bellows section of a large-end section of the boot adjacent to a boot band that fixes the large-end section of the boot to a joint outer ring does not interfere with the boot band, even at a high operating angle of the joint.

### BACKGROUND ART

A constant velocity universal joint is fitted with a bellows-like boot to prevent leakage of grease enclosed within the joint and ingress of foreign objects into an interior of the joint. Both ends of the boot are respectively engaged with an outer ring and with a shaft, the outer ring serving as an outer joint component of the constant velocity universal joint. A boot band clamps each end of the boot and fixes each end to the outer ring and to the shaft. The boot for a constant velocity universal joint is generally largely classified into a rubber boot made from a rubber material, such as a chloroprene rubber (CR), and a resin boot made from a resin material, such as a thermoplastic elastomer (TPE).

To engage and fix such boots to the outer ring that is the outer joint component of the constant velocity universal joint, a crimping-type boot band described in Patent Document 1 [(Japanese Patent Publication No. 2538554 (Japanese Patent Publication No. Showa 61-13007)] and the like is often used. In this type of boot band, a portion referred to as an "ear" is crimped and plastically deformed, thereby applying a bonding force to the outer ring or the shaft. The ear of the boot band projects over an outer circumference of the band.

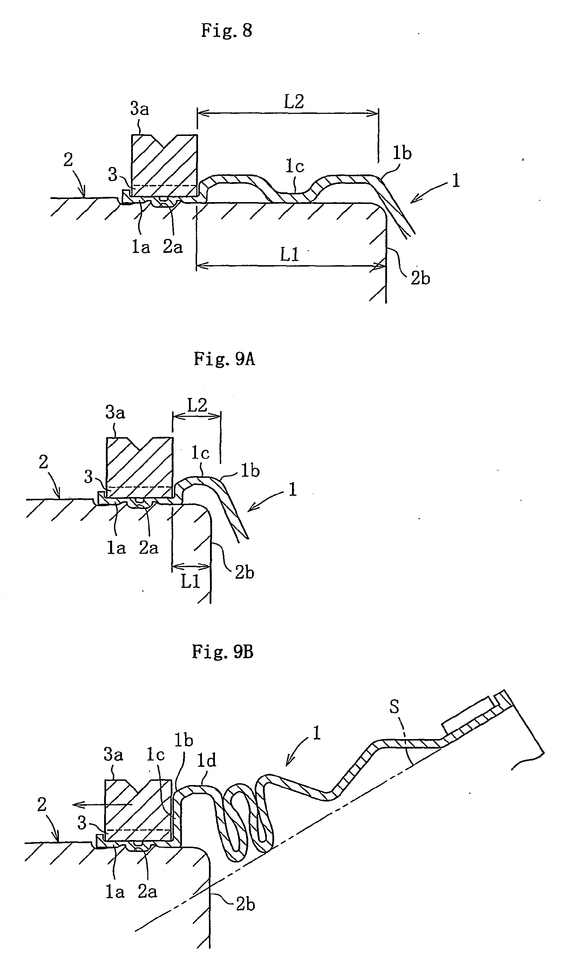

Conventionally, in a constant velocity universal joint using a crimping-type boot band such as this, a distance (L1) between an outer ring end surface 2b and an ear 3a of a boot band 3 and a distance (L2) to a bellows starting section 1b of the boot 1 are relatively short, as shown in Fig. 9 A. Therefore, when an operating angle of a shaft S in the constant velocity universal joint becomes large, as shown in Fig. 9 B, a portion of a bellows section 1d and a shoulder section 1c interfere with the ear 3a of the boot band 3 on a large diameter section 1a side. When such interference occurs, the boot 1 may become damaged or the boot band 3 may be pushed in an arrow direction in Fig. 9 B and shift. Therefore, to prevent interference between the boot 1 and the ear 3a of the boot band 3, various configurations disclosed in Patent Documents 2 to 5 have been proposed since the past.
Patent Document 1: Japanese Patent Publication No. 2538554
Patent Document 2: Japanese Patent Laid-Open Publication No. Heisei 7-229563
Patent Document 3: Japanese Patent Laid-Open Publication No. 2002-98238
Patent Document 4: Japanese Patent Laid-open Publication No. 2000-205291
Patent Document 5: Japanese Patent Laid-open Publication No. 2000-9153

### DISCLOSURE OF THE INVENTION

### PROBLEMS TO BE SOLVED BY THE INVENTION

In Patent Document 2, an interference component referred to as a rib is provided between an ear of a boot band and a bellows section of a boot. The configuration prevents interference between the bellows section and the ear of the boot band.

In Patent Document 3, a plurality of ribs are provided. The configuration further prevents interference between the ear of the boot band and the bellows section of the boot at a high angle.

However, although damage to the bellows section can be prevented by these configurations, contact between the ear of the boot band and a closest rib cannot be prevented. Therefore, a force causing the rib to press the ear in an axial direction may be generated, and the boot band may shift.

In Patent Document 4, an interference component referred to as a partition wall is provided between the ear of the boot band and the bellows section. In the configuration, the bellows section does not directly interfere with the ear of the boot band. However, although the configuration can prevent damage to the bellows section, a force that presses the boot band in the axial direction is generated as a result of the ear being indirectly pressed. The boot band may shift in this case as well.

In Patent Document 5, a spacer section is provided between the ear of the boot band and the bellows section. In the configuration, the bellows section does not interfere with a boot band crimping section. However, when an operating angle of the joint increases, such as to 45° or more, an amount of deformation of the bellows section further increases. Therefore, this configuration is also insufficient for completely preventing interference between the ear of the boot band and the bellows section or shifting of the boot band.

The present invention provides a boot for a constant velocity universal joint in which a portion of the boot does not interfere with an ear section of a boot band even when the joint is at a high operating angle exceeding 45°.

### MEANS FOR SOLVING THE PROBLEMS

To solve the above-described issues, an invention according to a first aspect of the invention is a boot for a constant velocity universal joint housing a torque transmitting component between an outer joint component and an inner joint component and in which a shaft connected to the inner joint component extends outside of the joint. The boot is disposed between an outer circumference of the outer joint component and an outer circumference of an intermediate section of the shaft. The boot includes a cylindrical large diameter section that is fixed onto an outer circumferential surface of the outer joint component by a boot band, a cylindrical small diameter section that is fixed onto an outer circumferential surface of the shaft, a bellows section that connects the large diameter section and the small diameter section, and a shoulder section that is provided between the large diameter section and the bellows section and covers an opening end side outer circumferential surface of the outer joint component. The shoulder section is extended by a predetermined length from the boot band to an opening end side of the outer joint component.

As a result of the boot shoulder section being extended by the predetermined length, a bellows starting section of the boot can be separated from an ear of the boot band by at least the predetermined length. In addition, flex resistance can be achieved over the entire shoulder section. Therefore, even when the shaft of the joint is at a high operating angle of, for example, 45° or more, a curved section formed in the shoulder section can be prevented from projecting towards the boot band side.

An invention according to a second aspect of the invention is the invention according to the first aspect of the invention, in which, even when a shaft is tilted at an operating angle exceeding 45° as a result of a predetermined extension length of the shoulder section being 5 millimeters or more, a curved section formed in the shoulder section in accompaniment with the tilting of the shaft does not project towards the boot band side. When the length of the shoulder section is at least 5 millimeter or more, the curved section of the shoulder section does not project towards the boot band side even when the shaft operating angle exceeds 45°.

An invention according to a third aspect of the invention is the invention according to the second aspect of the invention, in which a length of the shoulder section is 20 millimeters or less. Twenty millimeters is a sufficient length for the shoulder section to prevent the curved section of the shoulder section from projecting towards the boot band side. The shoulder section is not required to be any longer.

### ADVANTAGE OF THE INVENTION

As described above, in the present invention, the shoulder section that is provided between the large diameter section and the bellows section and covers the opening end side outer circumferential surface of the outer joint component is extended by the predetermined length from the boot band to the opening end side of the outer joint component, the large diameter section being an attaching section on the boot for the constant velocity universal joint for attaching the outer joint component. Therefore, the bellows starting section of the boot can be separated from the ear of the boot band by the predetermined length. In addition, even when the shaft in the joint is at a high operating angle of, for example, 45° or more as a result of flex resistance of the shoulder section, the curved section formed in the shoulder section can be prevented from projecting towards the boot band side. As a result, interference between the shoulder section of the boot and the ear of the boot band can be prevented and shifting of the boot band in an axial line direction can be prevented.

### BRIEF DESCRIPTION OF THE DRAWINGS

Figs. 1A-1C are cross-sectional views of a large diameter section of a boot for a constant velocity universal joint of the present invention; Fig. 1A is a cross-sectional view of when a shaft operating angle is 0°, Fig. 1B is when the shaft operating angle is 10°, and Fig. 1C is when the shaft operating angle is 45°;
Fig. 2 is a cross-sectional view of a large diameter section of a boot for a constant velocity universal joint according to a second embodiment of the present invention;
Fig. 3 is a cross-sectional view of the large diameter section of the boot for a constant velocity universal joint according to the second embodiment of the present invention;
Fig. 4 is a cross-sectional view of the large diameter section of the boot for a constant velocity universal joint according to the second embodiment of the present invention;
Fig. 5 is a cross-sectional view of the large diameter section of the boot for a constant velocity universal joint according to the second embodiment of the present invention;
Fig. 6 is a cross-sectional view of the large diameter section of the boot for a constant velocity universal joint according to the second embodiment of the present invention;
Fig. 7 is a cross-sectional view of the large diameter section of the boot for a constant velocity universal joint according to the second embodiment of the present invention;
Fig. 8 is a cross-sectional view of the large diameter section of the boot for a constant velocity universal joint according to the second embodiment of the present invention; and
Figs. 9A and 9B are cross-sectional views of a large diameter section of a boot for a conventional constant velocity universal joint; Fig. 9A is a cross-sectional view of when a shaft operating angle is 0° and Fig. 9B is a cross-sectional view of when the shaft operating angle is 45°.

### BEST MODE FOR CARRYING OUT THE INVENTION

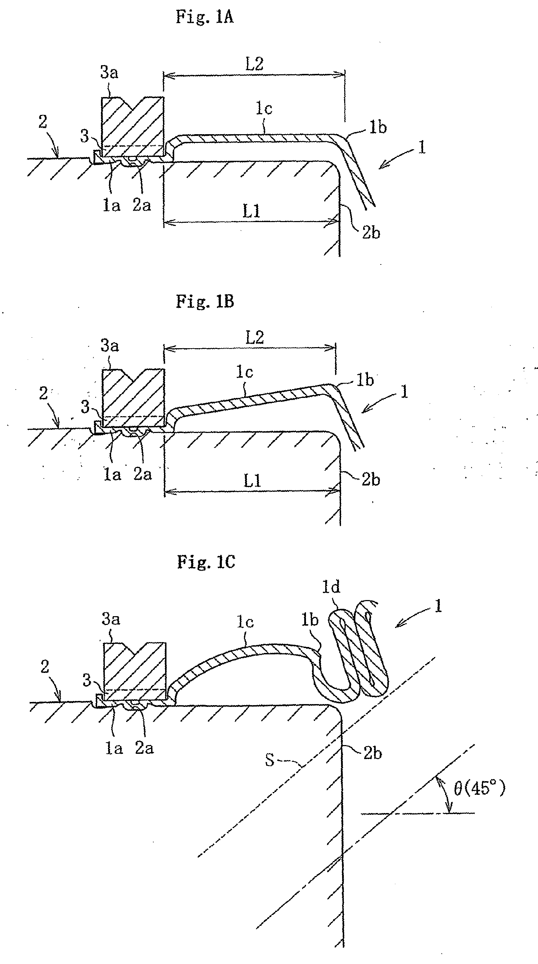

Embodiments of the present invention will be hereinafter described with reference to Fig. 1 to Fig. 8.
Figs. 1A-1C shows a cross-sectional view of a large diameter section of a boot 1 for a constant velocity universal joint according to a first embodiment of the present invention. An overall shape of the boot 1 is almost the same as a conventional shape. The boot 1 includes a large diameter section 1a, a small diameter section (not shown), and a bellows section (not shown). The large diameter section 1a is fixed onto an outer circumferential surface of an outer joint component (outer ring 2) of the constant velocity universal joint. The small diameter section is fixed onto an outer circumferential surface of a shaft in the constant velocity universal joint. The bellows section connects the large diameter section and the small diameter section. The bellows section includes peak sections that are about two peaks to seven peaks and valley sections between the peak sections. The boot 1 is formed from a rubber material, such as chloroprene rubber (CR). A material of the boot 1 is not limited to the rubber material and can also be formed from a resin material, such as thermoplastic elastomer (TPE).

The large diameter section 1a that is an outer ring attaching section of the boot 1 is engaged in an innermost portion of a shallow step section 2a formed on an outer circumferential surface of the outer ring 2. A boot band 3 is fixed onto an outer circumferential surface of the large diameter section 1a. A shoulder section 1c of a predetermined length (L2) is formed in a straight manner, adjacent to the large diameter section 1a. The shoulder section 1c extends horizontally (parallel to the outer ring outer circumferential surface), separated from the outer ring 2 from the large diameter section 1a to a bellows starting section 1b of the boot 1. The boot 1 becomes smaller in diameter in a radial direction from the bellows starting section 1b, forming a sidewall of a first bellows section.

In the conventional boot 1, as described above, the distance (L1) between the outer ring end surface 2b and the ear 3a of the boot band 3 and the distance (L2) to the bellows starting section 1b of the boot 1 are relatively short. In the present invention, as a result of the above-described length (L1) being set to be greater than is conventional, the distance (L2) to the boot bellow starting section 1b is increased. As a result, the shoulder section 1c has a shape differing from the shape of the bellows section 1d (cylindrical in the embodiment shown in Figs. 1A-1C). As a result of a thickness of the shoulder section 1c being appropriately set as required, the shoulder section 1c can be made to not be as easily deformed as the bellows section (improvement of flex resistance). Therefore, even when an operating angle θ of a shaft S of the joint increases, for example, from 10° to 45° or more, interference with the ear 3a of the boot band 3 can be prevented as shown in Figs. 1B and 1C. The boot of the present invention can achieve a similar flex resistance improvement effect even with a resin boot made from a resin material, such as thermoplastic elastomer (TPE), in addition to the rubber boot made from the rubber material, such as chloroprene rubber (CR).

According to tests conducted by the present inventor, it is confirmed that the flex resistance of the shoulder section 1c is relatively favorable when the thickness of the shoulder section 1c is about 1 millimeter to 2 millimeters and the distance (L2) is 5 millimeters to 20 millimeters, compared to that with other dimensions. It is also confirmed that such relationship between the dimensions and the flex resistance is established in both the rubber boot and the resin boot. Furthermore, a ratio of flexion deformity is also confirmed to be at a minimum when the thickness of the shoulder section 1c is about 1 millimeter to 2 millimeters and the distance (L2) is 10 millimeters to 15 millimeters.

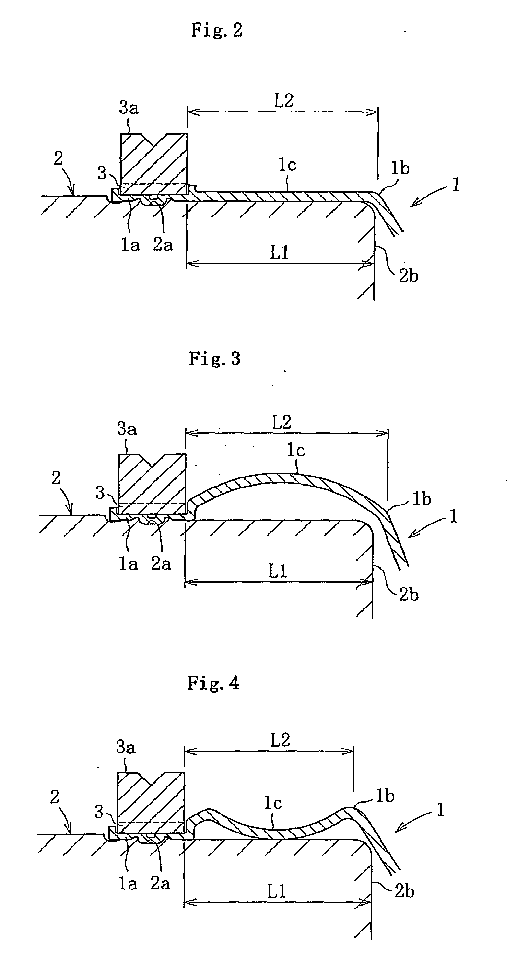

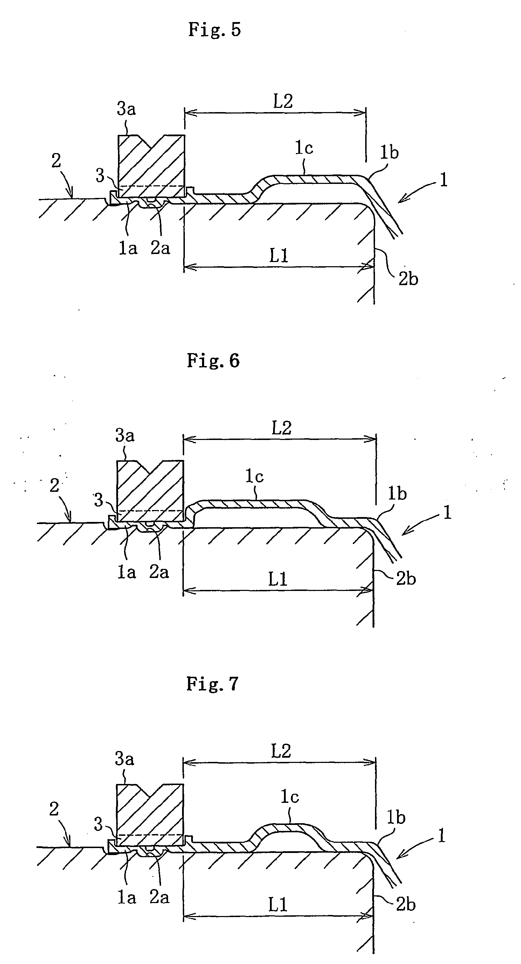

Fig. 2 to Fig. 9 show another embodiment of the present invention. Because the length (L1) is set to be long, a shape of the shoulder 1c of the length (L2) can be variably changed. In Fig. 2, the shoulder section 1c is placed in contact with the outer ring 2, at a same height (diameter) as the large diameter section 1a. In Fig. 3, the shoulder section 1c is curved outward in a convex arc shape. On the other hand, in Fig. 4, the shoulder section 1c is curved inward in a concave arc shape. Fig. 5 shows a shoulder 1c that is a combination of Figs. 1A-1C and Fig. 2. A side closer to the large diameter section 1a is in contact with the outer ring 2 and an opposite side rises above the outer ring 2. Fig. 6 also shows a shoulder 1c that is a combination of Figs. 1A-1C and Fig. 2. The side closer to the large diameter section 1a rises above the outer ring 2 and the opposite side is in contact with the outer ring 2. In Fig. 7, both sides of the shoulder section 1c are in contact with the outer ring 2 and the center rises above the outer ring 2. In Fig. 8, both sides of the shoulder section 1c rise above the outer ring 2 and the center is in contact with the outer ring 2.

In any embodiment above, the shoulder section 1c has flex resistance because the shoulder section 1c has the length (L2) that is the predetermined length and the section has a cylindrical shape. Even when the joint operating angle is a large angle exceeding 45°, the shoulder section 1c and the bellows section 1d can be prevented from interfering with the ear 3a of the boot band 3. It is confirmed that a preferable relationship between the thickness of the shoulder section 1c and the distance (L2) is established in any boot in Fig. 2 to Fig. 8 in a manner similar to that in Figs. 1A-1C.

The embodiments of the present invention have been described above. However, the present invention is not limited to the embodiments above. Various modifications are possible based on technical spirit included within the scope of the invention.

### INDUSTRIAL APPLICABILITY

The constant velocity universal joint boot of the present invention can be applied to a boot used in any constant velocity universal joint, such as a type that can have a large operating angle of 45° or more, such as a fixed constant velocity universal joint using a ball that is, for example, a Rzeppa-type and a Barfield-type, and a type including a mechanism that slides in an axial line direction of the outer joint component, such as a sliding-type constant velocity universal joint that is, for example, a double offset-type, a tripod-type, and a cross groove-type.

## Claims

1. A boot for a constant velocity universal joint that is a boot for a constant velocity universal joint housing a torque transmitting component between an outer joint component and an inner joint component and in which a shaft connected to the inner joint component extends outside of the joint, the boot being disposed between an outer circumference of the outer joint component and an outer circumference of an intermediate section of the shaft, the boot comprising:
a cylindrical large diameter section that is fixed onto an outer circumferential surface of the outer joint component by a boot band, a cylindrical small diameter section that is fixed onto an outer circumferential surface of the shaft, a bellows section that connects the large diameter section and the small diameter section, and a shoulder section that is provided between the large diameter section and the bellows section and covers an opening end side outer circumferential surface of the outer joint component, wherein
the shoulder section is extended by a predetermined length from the boot band to an opening end side of the outer joint component.

2. The boot for a constant velocity universal joint according to claim 1, wherein, even when a shaft is tilted at an operating angle exceeding 45° as a result of a predetermined extension length of the shoulder section being 5 millimeters or more, a curved section formed in the shoulder section in accompaniment with the tilting of the shaft does not project towards the boot band side.

3. The boot for a constant velocity universal joint according to claim 2, wherein a length of the shoulder section is 20 millimeters or less.
